# FASCICULE DE BREVET EUROPEEN

(11) **EP 2 436 514 B1**
(45) Date de publication et mention de la délivrance du brevet: **28.08.2013**
(21) Numéro de dépôt: 11306245.9
(22) Date de dépôt: 29.09.2011
(51) Int. Cl.: B32B 3/24, B32B 5/26, B32B 38/10, B44C 3/02

(54) **Procédé de fabrication d'un revêtement décoré, et revêtement décoré correspondant**
Herstellungsverfahren einer dekorierten Verkleidung, und entsprechende dekorierte Verkleidung
Method for manufacturing a decorated coating and corresponding decorated coating

(30) Priorité: 29.09.2010 FR 1057865
(43) Date de publication de la demande: 04.04.2012
(73) Titulaire: Faurecia Automotive Industrie, 92000 Nanterre (FR)
(72) Inventeur: Habert, Cédric, 60510 Le Fay Saint Quentin (FR)
(74) Mandataire: Blot, Philippe Robert Emile

(56) Documents cités:
- AU-A1- 2009 208 100
- US-A- 5 049 431
- US-A- 5 422 154

## Description

L'invention concerne en général les procédés de fabrication de revêtements décorés, notamment de revêtements textiles.

Plus précisément, l'invention concerne, selon un premier aspect, un procédé de fabrication d'un revêtement selon le préambule de la revendication 1.

Un tel procédé est connu de AU 2009/208100.

Par ailleurs, US-6 633 019 décrit un procédé de fabrication dans lequel les nappes sont coinjectées et dans lequel les perforations peuvent être réalisées par ablation de matière dans l'une des nappes, à l'aide d'un laser.

Une telle méthode est lente, et ne permet pas de fabriquer les revêtements à haute cadence.

Dans ce contexte, l'invention vise à proposer un procédé qui permette une meilleure cadence de production.

A cette fin, l'invention porte sur un procédé de fabrication du type précité, caractérisé en ce que la perforation est réalisée avant de coucher les nappes les unes sur les autres.

Le procédé peut également présenter une ou plusieurs des caractéristiques ci-dessous, considérées individuellement ou selon toutes les combinaisons techniquement possibles :
- la perforation est de taille suffisante pour laisser apparaître une autre nappe à travers la nappe portant la perforation ;
- les nappes sont de couleurs différentes et/ou de textures différentes et/ou de brillances différentes et/ou sont en des matériaux différents et/ou présentent des motifs différents ;
- au moins un des matériaux est un matériau textile, de préférence tous les matériaux ;
- au moins un des matériaux est une moquette, de préférence tous les matériaux ;
- les nappes sont couchées les unes sur les autres par calandrage ;
- les nappes sont fixées les unes aux les autres par aiguilletage ou dilourage ;
- la perforation est réalisée en découpant la nappe, de préférence par poinçonnement à l'aide d'un cylindre tournant.

Selon un second aspect, l'invention porte sur un revêtement selon la revendication 9.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est un diagramme d'étape, indiquant les principales étapes du procédé de l'invention ;
- la figure 2 est une représentation schématique d'une ligne de production adaptée pour la mise en oeuvre du procédé ;
- la figure 3 est une vue en perspective, agrandie, montrant l'étape de calandrage ; et
- la figure 4 est une représentation schématique de l'étape de fixation par aiguilletage.

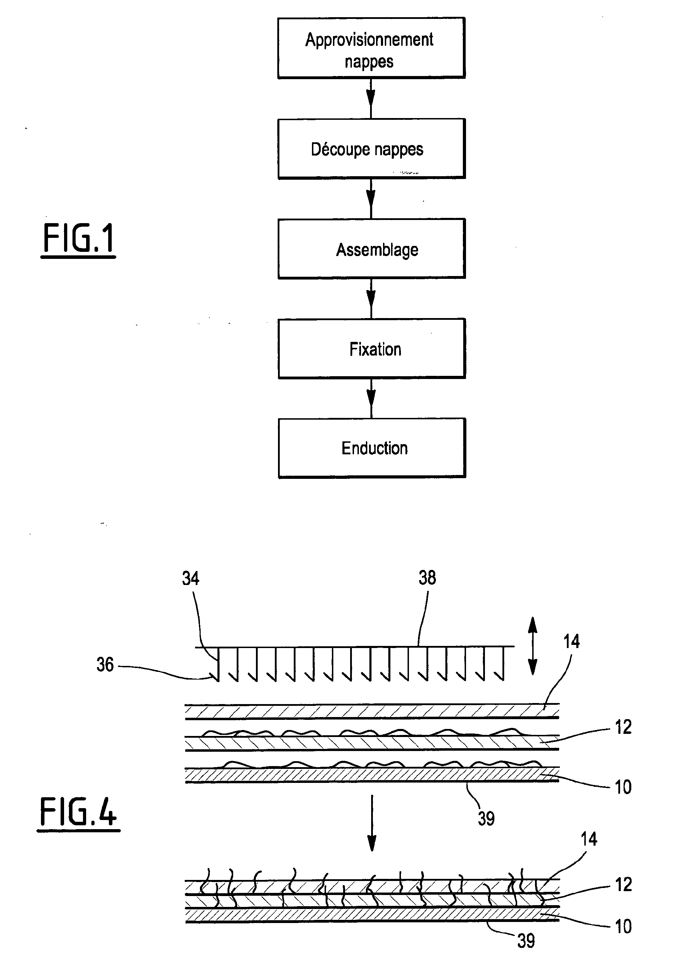

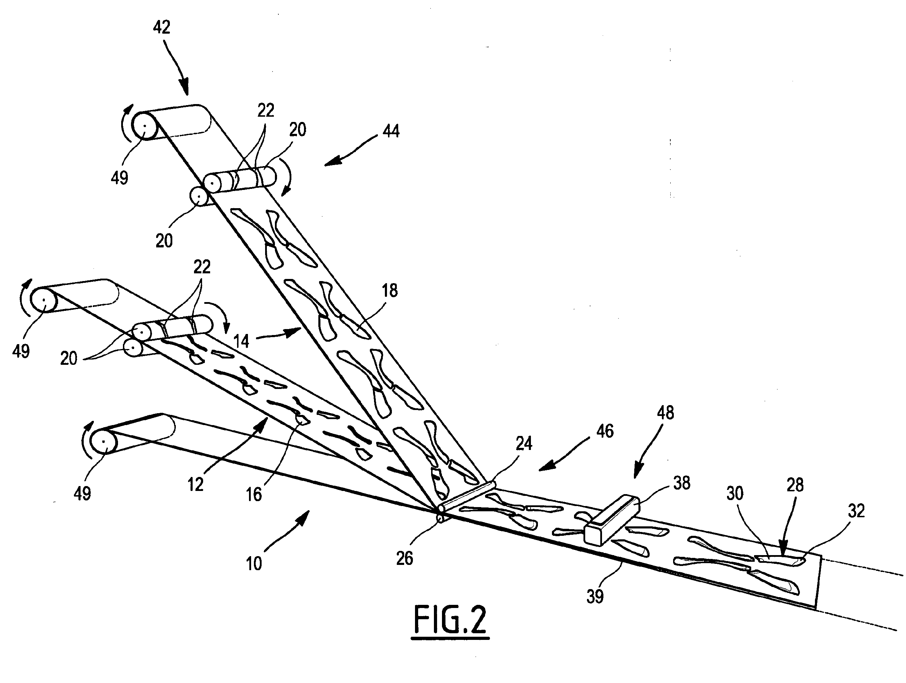

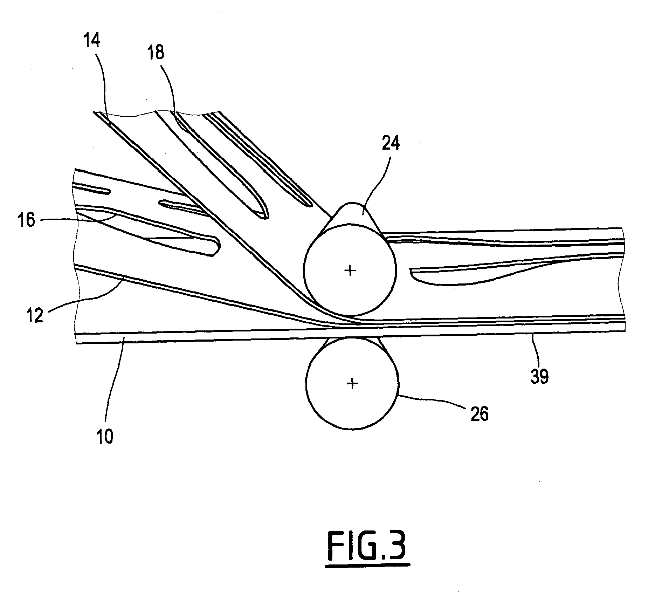

Le procédé illustré par le diagramme d'étape de la figure 1 est destiné typiquement à la production de tapis de sol décorés, pour l'habitacle ou le coffre de véhicules automobiles. Comme le montrent les figures 2 et 3, ces tapis comportent plusieurs nappes de matériaux textiles superposés et fixés les uns aux autres.

On entend ici par « superposé» le fait que les nappes soient couchées les unes au-dessus des autres. Les nappes sont plaquées les une contre les autres par leurs grandes faces respectives.

On entend ici par « matériau textile » un matériau comportant essentiellement des fibres.

Les fibres peuvent être en des matériaux naturels ou synthétiques, organiques ou minéraux.

Les fibres peuvent être tissées, tricotées, ou assemblées par toute autre technique adaptée. Les nappes peuvent également être constituées de matériaux non tissés, consolidés ensemble selon toutes les techniques adaptées.

Comme illustré sur la figure 1, le procédé comporte les étapes successives suivantes :
- approvisionner au moins deux nappes 10, 12, 14 en des matériaux d'aspects différents ;
- réaliser au moins une perforation 16, 18 dans au moins une des nappes ;
- coucher les nappes 10, 12, 14 les unes sur les autres et fixer les nappes 10, 12, 14 les unes aux autres.

Le procédé peut encore comporter, après la fixation des nappes 10, 12, 14 les unes aux autres, une étape d'enduction d'une face inférieure du revêtement.

Dans l'exemple de réalisation des figures 2 et 3, on approvisionne trois nappes 10, 12 et 14 pour la fabrication du revêtement.

Les différentes nappes peuvent être de couleurs différentes, et/ou de textures différentes et/ou de brillances différentes et/du être en des matériaux différents et/ou présenter des motifs décoratifs différents (mouchetage, formes géométriques ou non, etc.). Elles peuvent également présenter des épaisseurs différentes, des rugosités différentes, des souplesses différentes, etc...

La nappe 10 constitue le côté du revêtement destiné à reposer sur le plancher du véhicule automobile. Elle est appelée nappe de base dans la description qui va suivre. Elle présente typiquement une épaisseur plus élevée que les nappes 12 et 14. Par exemple, la nappe 10 présente un poids compris entre 50 et 500 grammes/m², de préférence comprise entre 150 et 300 grammes/m².

La nappe 14 est destinée à former le côté visible du revêtement. Elle est appelée nappe visible dans la description qui suit. Elle comporte une pluralité de perforations 18, réparties par exemple sur toute sa surface. Les perforations 18 sont traversantes. Elles peuvent présenter toutes sortes de taille et de formes, en fonction du décor souhaité pour le revêtement.

La nappe 14 présente un poids inférieur à celui de la nappe 10, compris par exemple entre 25 et 300 grammes/m², de préférence compris entre 50 et 150 grammes/m².

La nappe 12 est une nappe intermédiaire, destinée à être intercalée entre la nappe de base 10 et la nappe visible 14. La nappe 12 comporte elle aussi des perforations 16.

Les perforations 16 sont traversantes. Elles présentent par exemple des formes semblables, mais légèrement différentes des formes des perforations 18. La distribution des perforations 16 dans la nappe 12 est similaire à la distribution des perforations 18 dans la nappe 14.

La nappe de base 10 ne comporte généralement pas de perforations.

La nappe intermédiaire 12 présente typiquement un poids compris entre 25 et 300 grammes/m², de préférence compris entre 50 et 150 grammes/m².

Les nappes 10, 12 et 14 sont approvisionnées typiquement chacune sous forme d'une bande de grande longueur et de largeur déterminée. Par exemple, les nappes 10, 12 et 14 sont approvisionnées sous la forme de bandes de même largeur.

Les perforations 16 et 18 sont réalisées respectivement dans les nappes 12 et 14 avant de coucher les nappes les unes sur les autres. Les perforations 16 et 18 sont réalisées en découpant respectivement la nappe 12 et la nappe 14. La découpe peut être réalisée en utilisant de multiples technologies.

De préférence, les perforations 16 et 18 sont réalisées en utilisant un cylindre 20 tournant portant sur sa surface extérieure des lames 22 de formes correspondantes aux perforations à réaliser, comme illustré sur la figure 2. Alternativement, les perforations 16 et 18 peuvent être réalisées par poinçonnement respectivement des bandes 12 et 14. Les perforations 16 et 18 pourraient encore être réalisées à l'aide d'un laser de découpe, d'un jet d'eau, d'une lame chaude (ou froide) de découpe, ou par tout autre type d'outil de découpe adapté.

Les nappes 10, 12 et 14 sont ensuite couchées les unes sur les autres, comme illustré sur la figure 2. Les nappes 10, 12 et 14 sont typiquement couchées les unes sur les autres par calandrage (figure 3).

Pour ce faire, les nappes 10, 12 et 14 sont passées entre deux cylindres tournants 24, 26. Les cylindres 24 et 26 sont sensiblement parallèles l'un à l'autre et définissent entre eux une fente de passage pour les nappes 10, 12 et 14. Comme visible sur la figure 2, la nappe 12 est placée entre les nappes 10 et 14. La hauteur de la fente entre les cylindres 24 et 26 est prévue pour que les cylindres 24 et 26 exercent une pression sur les trois nappes 10, 12, 14 couchées les une sur les autres.

On réalise ainsi un assemblage des nappes 10, 12, 14 les unes aux autres.

Par ailleurs, au cours du défilement des nappes 10, 12, 14, les nappes 12 et 14 sont calées l'une par rapport à l'autre de telle sorte que les perforations 16 et 18 soient au moins partiellement superposées les unes aux autres. Les nappes 12 et 14 sont calées suivant le sens de défilement des nappes et également transversalement au sens de défilement des nappes.

La taille, la forme, et le positionnement des perforations 16 et 18 sont choisis de manière à ce que le revêtement présente des motifs décoratifs 28. Chaque motif décoratif 28 correspond à une perforation 16 et une perforation 18 sensiblement superposées l'une à l'autre. La taille de la perforation 16 est choisie de manière à laisser apparaître la nappe 10 située sous la nappe 12. La taille, la forme, et la position de la perforation 18 est choisie :
- de manière à laisser apparaître la nappe 10 à travers les zones 30 où les perforations 16 et 18 sont superposées ;
- de manière à laisser apparaître le matériau de la nappe 12 dans d'autres zones 32.

Ainsi, dans chaque motif 24, les matériaux des nappes 10, 12 et 14 apparaissent, juxtaposés les uns aux autres.

Après l'étape de calandrage, les nappes 10, 12, 14 sont fixées les unes aux autres. Par exemple, les nappes 10, 12, 14 sont fixées les unes aux autres par aiguilletage, cette étape étant illustrée sur la figure 4. L'aiguilletage est une technique de fixation basée sur l'entremêlement des fibres des différentes nappes à fixer. L'aiguilletage est réalisé par l'intermédiaire d'un grand nombre d'aiguilles 34 portant des barbelures 36. Les aiguilles 34 sont fixées sur un support 38. Le support 38 et les aiguilles 34 sont déplacés perpendiculairement à la surface des nappes 10, 12 et 14, de manière à faire pénétrer les aiguilles 34 à travers les nappes 14 et 12 jusque dans l'épaisseur de la nappe de base 10. Le support 38 et les aiguilles 34 sont ensuite déplacés en sens inverse, de manière à faire ressortir les aiguilles 34 hors des nappes 10, 12 et 14. Ce faisant, les barbelures 36 entraînent certaines fibres des couches inférieures 10 et 12 et les ramènent dans l'épaisseur de la couche supérieure 14. Les fibres de la nappe de base 10 se mélangent ainsi aux fibres de la nappe intermédiaire 12 et également à celles de la nappe visible 14. De même, les fibres de la nappe intermédiaire 12 sont ramenées au sein de la nappe visible 14 et se mélangent aux fibres de la nappe 14.

Alternativement, les nappes 10, 12 et 14 pourraient être fixées les unes aux autres par dilourage. Le dilourage est une technique de fixation proche de l'aiguilletage. Cette technique est connue et ne sera décrite que très brièvement ci-dessous.

Pendant l'opération de dilourage, une brosse est placée contre la nappe visible 14. Le support 38 portant les aiguilles 34 est placé de l'autre côté du revêtement, c'est-à-dire du côté de la nappe de base 10. La brosse comporte des poils courts, rigides, perpendiculaires à la nappe 14. Les aiguilles 34 pénètrent à travers la nappe de base 10 et la nappe intermédiaire 12 jusque dans l'épaisseur de la nappe visible 14. Ce faisant, elle presse la face externe de la nappe 14 contre la brosse. Ceci contribue à donner un aspect de velours à la face visible de la nappe 14. Lors du retrait des aiguilles 34, des fibres de la nappe 14 sont entraînées jusque dans l'épaisseur de la nappe de base 10. De même, des fibres de la nappe 12 sont entraînées dans l'épaisseur de la nappe 10.

Après l'opération de fixation, une enduction est réalisée sur une face inférieure 39 du revêtement. La face inférieure 39 est la face de la nappe 10 qui est opposée à la nappe 12, et qui reste libre. Cette face est enduite d'un liquide de type colle, destiné à coller les fibres les unes aux autres. Par exemple, le liquide est une solution de styrène-butadiène.

A l'issue de l'opération d'enduction, le revêtement est découpé aux dimensions souhaitées, par toutes techniques adaptées.

L'ensemble des opérations, à savoir la découpe des nappes 12 et 14, l'assemblage des nappes 10, 12 et 14 par calandrage et la fixation des trois nappes les unes aux autres par aiguilletage ou dilourage est de préférence réalisé sur une ligne de production continue, comme illustré sur la figure 2.

La ligne de production comporte un poste d'alimentation 42, prévu pour l'alimentation de la ligne avec les nappes 10, 12, 14, un poste 44 de découpe pour chacune des nappes 12 et 14, un poste 46 d'assemblage des nappes les unes aux autres, et un poste 48 de fixation des nappes assemblées. La ligne peut encore comprendre un poste de stockage du revêtement, par exemple sous forme de rouleau. Ce poste de stockage n'est pas présenté. La ligne peut également comporter un poste d'enduction et un poste de découpe, non représentés.

Les nappes arrivent sous la forme de bandes, formant des rouleaux de grande longueur 49.

Au poste d'alimentation 42, les rouleaux 49 sont placés sur des supports tournants (non représentés), prévus pour permettre le dévidement des rouleaux 49 et l'alimentation continue de la ligne avec les nappes 10, 12 et 14.

Chaque poste de découpe 44 comporte au moins deux rouleaux rotatifs 20 entre lesquels passe la nappe à découper, et des moyens d'entraînement en rotation des rouleaux 20 (non représentés). Au moins l'un des deux rouleaux 20 porte les couteaux 22.

Le poste de découpe 44 a pour fonction de découper les perforations 16, 18 respectivement dans les nappes 12, 14.

Les nappes 10, 12, 14 convergent ensuite vers le poste d'assemblage 46, où elles sont couchées les une contre les autres, assemblées les unes aux autres par calandrage et où les perforations 16 et 18 sont calées les unes par rapport aux autres. Le poste d'assemblage 46 comporte les deux rouleaux 24, 26 entre lesquels défilent les nappes 10, 12, 14.

Les trois bandes 10, 12, 14 assemblées les unes aux autres passent ensuite au poste de fixation 48. Elles sont fixées les unes aux autres par aiguilletage ou dilourage à ce poste. Ce poste comporte au moins un support 38 sur lequel une pluralité d'aiguille 34 sont montées. II comporte également des moyens pour déplacer le support 38 par rapport aux nappes 10, 12 ,14. Le poste 48 peut également comporter une surface d'appui non représentée à l'opposé du support 38, contre laquelle défilent les nappes 10, 12, 14. La surface d'appui est prévue pour permettre à la bande de ne pas fléchir excessivement quand les aiguilles 34 pénètrent à l'intérieur des nappes.

Le fait de réaliser les perforations avant de coucher les nappes les unes sur les autres permet d'utiliser des techniques de découpe rapides et performantes. La cadence de fabrication du revêtement est grandement augmentée.

II est ainsi possible de réaliser des perforations de grandes tailles, permettant de laisser apparaître une autre nappe à travers ladite perforation.

On peut ainsi constituer des décors attractifs et originaux, en combinant des matériaux d'aspects différents. Plusieurs matériaux peuvent être facilement associés.

Le procédé est particulièrement adapté à la constitution de revêtements à partir de nappes en matériaux textiles, notamment en moquette. La moquette est un matériau textile, par exemple en non tissé, par exemple de type feutre. Plus précisément, le revêtement peut être une moquette aiguilletée.

L'utilisation du calandrage pour coucher les nappes les unes sur les autres permet de réaliser un assemblage des nappes les unes aux autres, avant fixation définitive. Cette étape permet également de positionner les perforations des différentes nappes les unes par rapport aux autres, de manière à obtenir le motif souhaité pour le revêtement.

Les techniques d'aiguilletage ou de dilourage sont bien adaptées pour la fixation de plusieurs nappes couchées les unes sur les autres et constituées de matériaux textiles.

L'invention a été décrite pour la fabrication d'un revêtement à trois couches, une couche de base de préférence non perforée et deux couches perforées. Le revêtement pourrait ne comporter que deux couches, une couche de base non perforée et une couche visible perforée. Le revêtement pourrait également comporter plus de trois couches, par exemple quatre couches, cinq couches ou plus. II peut comporter dans ce cas trois couches perforées, quatre couches perforées ou plus. Le revêtement pourrait encore comporter deux nappes non perforées couchées l'une sur l'autre, et une ou plusieurs nappes perforées couchées sur les nappes non perforées.

L'invention a été décrite pour la production de tapis d'habitacle ou de coffre. Elle s'applique également à la production de toutes sortes de revêtements, textiles ou non textiles, destinés à revêtir les sièges d'un véhicule automobile, ou les surfaces visibles de l'habitacle, ou à tout autre revêtement.

Le procédé a été décrit dans le cadre d'une ligne de production continue. Toutefois, les différentes opérations mises en oeuvre, découpe, assemblage, fixation, pourraient être réalisées à des postes séparés, qui ne sont pas agencés sur une même ligne de production. Les différentes opérations peuvent ainsi être réalisées de manière décalées dans le temps, et/ou en des lieux différents.

## Revendications

1. Procédé de fabrication d'un revêtement, le procédé comprenant les étapes suivantes :
- approvisionner au moins une nappe de base (10), une nappe intermédiaire (12) et une nappe visible (14) en des matériaux d'aspects différents ;
- réaliser au moins une perforation (16, 18) dans au moins la nappe intermédiaire (12) et la nappe visible (14);
- coucher la nappe de base (10, la nappe intermédiaire (12) et la nappe visible (14) dans cet ordre les unes sur les autres et fixer les nappes (10, 12, 14) les unes aux autres, les perforations (16, 18) de la nappe intermédiaire (12) et de la nappe visible (14) étant au moins partiellement superposées l'une à l'autre ; les perforations (16, 18) étant réalisées avant de coucher les nappes (10, 12, 14) les unes sur les autres, **caractérisé en ce que** lesdites perforations (16, 18) sont agencées de telle sorte que la nappe de base (10) apparaisse dans une zone (30) où lesdites perforations (16,18) sont superposées, et que la nappe intermédiaire (12) apparaisse dans une zone (32) de la perforation (18) de la nappe visible (14) où lesdites perforations (16, 18) ne sont pas superposées.

2. Procédé selon la revendication 1, **caractérisé en ce que** la perforation (16, 18) est de taille suffisante pour laisser apparaître une autre nappe (10, 12) à travers la nappe portant la perforation.

3. Procédé selon la revendication 1 ou 2, **caractérisé en ce que** les nappes (10, 12, 14) sont de couleurs différentes et/ou de textures différentes et/ou de brillances différentes et/ou sont en des matériaux différents et/ou présentent des motifs différents.

4. Procédé selon l'une quelconque des revendications précédentes, **caractérisé en ce qu'**au moins un des matériaux est un matériau textile, de préférence tous les matériaux.

5. Procédé selon l'une quelconque des revendications précédentes, **caractérisé en ce qu'**au moins un des matériaux est une moquette, de préférence tous les matériaux.

6. Procédé selon l'une quelconque des revendications précédentes, **caractérisé en ce que** les nappes (10, 12, 14) sont couchées les unes sur les autres par calandrage.

7. Procédé selon l'une quelconque des revendications précédentes, **caractérisé en ce que** les nappes (10, 12, 14) sont fixées les unes aux les autres par aiguilletage ou dilourage.

8. Procédé selon l'une quelconque des revendications précédentes, **caractérisé en ce que** la perforation (16, 18) est réalisée en découpant la nappe (12, 14), de préférence par poinçonnement à l'aide d'un cylindre tournant.

9. Revêtement comprenant au moins au moins trois nappes (10, 12, 14) en des matériaux d'apparences différentes, au moins deux des nappes (12, 14) ayant chacune au moins une perforation (16, 18), les nappes (10, 12, 14) étant couchées les unes sur les autres et fixées les unes aux autres, les perforations (16, 18) desdites deux nappes (12, 14) étant au moins partiellement superposées l'une à l'autre, le revêtement comprenant au moins une nappe de base (10), une nappe intermédiaire (12) et une nappe visible (14) superposés les unes sur les autres dans cet ordre, la nappe intermédiaire (12) et la nappe visible (14) ayant chacune au moins une perforation (16, 18), **caractérisé en ce que** lesdites perforations (16, 18) sont agencées de telle sorte que la nappe de base (10) apparaisse dans une zone (30) où lesdites perforations (16, 18) sont superposées, et que la nappe intermédiaire (12) apparaisse dans une zone (32) de la perforation (18) de la nappe visible (14) où lesdites perforations (16, 18) ne sont pas superposées.

## Patentansprüche

1. Verfahren zur Herstellung eines Verkleidungsmaterials, wobei das Verfahren die nachfolgenden Schritte aufweist:
- Bereitstellen wenigstens einer Basismaterialbahn (10), einer Zwischenmaterialbahn (12) und einer sichtbaren Materialbahn (14) aus Materialen unterschiedlichen Aussehens,
- Realisieren wenigstens einer Perforation (16, 18) in wenigstens der Zwischenmaterialbahn (12) und der sichtbaren Materialbahn (14).
- Aufeinander-Anbringen der Basismaterialbahn (10), der Zwischenmaterialbahn (12) und der sichtbaren Materialbahn (14) in dieser Reihenfolge und Fixieren der Materialbahnen (10, 12, 14) aneinander, wobei die Perforationen (16, 18) der Zwischenmaterialbahn (12) und der sichtbaren Materialbahn (14) wenigstens teilweise einander überlagert werden, wobei die Perforationen (16, 18) realisiert werden vor dem Aufeinander-Anbringen der Materialbahnen (10, 12, 14), **dadurch gekennzeichnet, dass** die besagten Perforationen (16, 18) derart angeordnet sind, dass die Basismaterialschicht (10) in einer Zone (32) vorliegt, wo die besagten Perforationen (16, 18) überlagert werden, und dass die Zwischenmaterialschicht (12) in einer Zone (32) der Perforation (18) der sichtbaren Materialschicht (14) vorliegt, wo die besagten Perforationen (16, 18) nicht überlagert werden.

2. Verfahren gemäß Anspruch 1, **dadurch gekennzeichnet, dass** die Perforation (16, 18) von einer Größe ist, die ausreicht, um eine andere Materialbahn (10, 12) quer zur Materialbahn, die die Perforation hat, erscheinen zu lassen.

3. Verfahren gemäß Anspruch 1 oder 2, **dadurch gekennzeichnet, dass** die Materialbahnen (10, 12, 14) von unterschiedlichen Farben und/oder unterschiedlichen Texturen und/oder unterschiedlichen Helligkeiten sind und/oder aus unterschiedlichen Materialen sind und/oder unterschiedliche Motive darstellen.

4. Verfahren gemäß einem der vorhergehenden Ansprüche, **dadurch gekennzeichnet, dass** wenigstens eines der Materialen, bevorzugt alle Materialen, ein Textilmaterial ist.

5. Verfahren gemäß einem der vorhergehenden Ansprüche, **dadurch gekennzeichnet, dass** wenigstens eines der Materialien, bevorzugt alle Materialien, ein Teppich ist.

6. Verfahren gemäß einem der vorhergehenden Ansprüche, **dadurch gekennzeichnet, dass** die Materialbahnen (10, 12, 14) durch Kalandern aufeinander angebracht werden.

7. Verfahren gemäß einem der vorhergehenden Ansprüche, **dadurch gekennzeichnet, dass** die Materialbahnen (10, 12, 14) durch Nadeln oder Dilourage aneinander fixiert werden.

8. Verfahren gemäß einem der vorgehenden Ansprüche, **dadurch gekennzeichnet, dass** die Perforation (16, 18) realisiert wird durch Schneiden der Materialbahn (12, 14), bevorzugt durch Stanzen mittels eines Rotationszylinders.

9. Verkleidungsmaterial mit wenigstens wenigstens drei Materialbahnen (10, 12, 14) aus Materialen unterschiedlichen Aussehens, wobei wenigstens zwei der Materialbahnen (12, 14) jeweils wenigstens eine Perforation (16, 18) haben, wobei die Materialbahnen (10, 12, 14) aufeinander angebracht und aneinander fixiert sind, wobei die Perforationen (16, 18) der besagten beiden Materialbahnen (12, 14) wenigstens teilweise einander überlagert sind, wobei das Verkleidungsmaterial wenigstens eine Basismaterialbahn (10), eine Zwischenmaterialbahn (12) und eine sichtbare Materialbahn (14), die in dieser Reihenfolge einander überlagert sind, aufweist, wobei die Zwischenmaterialschicht (12) und die sichtbare Materialschicht (14) jeweils wenigstens eine Perforation (16, 18) haben, **dadurch gekennzeichnet, dass** die besagten Perforationen (16, 18) derart angeordnet sind, dass die Basismaterialbahn (10) in einer Zone (30) vorliegt, wo die besagten Perforationen (16, 18) überlagert sind, und dass die Zwischenmaterialbahn (12) in einer Zone (32) der Perforation (18) der sichtbaren Materialschicht (14) vorliegt, wo die besagten Perforationen (16, 18) nicht überlagert sind.

## Claims

1. Method for manufacturing a covering, the method comprising the following steps:
- providing at least one base layer (10), an intermediate layer (12) and a visible layer (14) made from materials with different appearances;
- producing at least one perforation (16, 18) in at least the intermediate layer (12) and the visible layer (14);
- laying the base layer (10), the intermediate layer (12) and the visible layer (14) in this order on one another and fixing the layers (10, 12, 14) to one another, the perforations (16, 18) in the intermediate layer (12) and the visible layer (14) being at least partially superimposed on each other; the perforations (16, 18) being produced before laying the layers (10, 12, 14) on one another, **characterised in that** said perforations (16, 18) are arranged so that the base layer (10) appears in an area (30) where said perforations (16, 18) are superimposed, and so that the intermediate layer (12) appears in an area (32) of the perforation (18) in the visible layer (14) where said perforations (16, 18) are not superimposed.

2. Method according to claim 1, **characterised in that** the perforation (16, 18) is of sufficient size to reveal another layer (10, 12) through the layer bearing the perforation.

3. Method according to claim 1 or 2, **characterised in that** the layers (10, 12, 14) have different colours and/or different textures and/or different sheens and/or are made from different materials and/or have different patterns.

4. Method according to any one of the preceding claims, **characterised in that** at least one of the materials is a textile material, and preferably all the materials.

5. Method according to any one of the preceding claims, **characterised in that** at least one of the materials is a moquette, and preferably all the materials.

6. Method according to any one of the preceding claims, **characterised in that** the layers (10, 12, 14) are laid on one another by calendering.

7. Method according to any one of the preceding claims, **characterised in that** the layers (10, 12, 14) are fixed on one another by needling or by needlebonding.

8. Method according to any of the preceding claims, **characterised in that** the perforation (16, 18) is performed by cutting the layer (12, 14), preferably by punching by means of a rotating cylinder.

9. Covering comprising at least three layers (10, 12, 14) made from materials with different appearances, at least two of the layers (12, 14) each having at least one perforation (16, 18), the layers (10, 12, 14) being laid on one another and fixed to one another, the perforations (16, 18) in said two layers (12, 14) being at least partially superimposed on each other, the covering comprising at least one base layer (10), an intermediate layer (12) and a visible layer (14) superimposed on one another in this order, the intermediate layer (12) and the visible layer (14) each having at least one perforation (16, 18), **characterised in that** said perforations (16, 18) are arranged so that the base layer (10) appears in an area (30) where said perforations (16, 18) are superimposed, and so that the intermediate layer (12) appears in an area (32) of the perforation (18) in the visible layer (14) where said perforations (16, 18) are not superimposed.
